# EUROPÄISCHE PATENTSCHRIFT

(11) **EP 3 225 811 B1**
(45) Veröffentlichungstag und Bekanntmachung des Hinweises auf die Patenterteilung: **27.10.2021**
(21) Anmeldenummer: 17157397.5
(22) Anmeldetag: 22.02.2017
(51) Int. Cl.: F02B 67/04, F02B 41/10

(54) **ANORDNUNG VON NEBENAGGREGATEN BEI EINER BRENNKRAFTMASCHINE**
ARRANGEMENT WITH AUXILIARY DEVICES IN A COMBUSTION ENGINE
SYSTÈME DE MODULES AUXILIAIRES POUR UN MOTEUR À COMBUSTION INTERNE

(30) Priorität: 22.03.2016 AT 1512016
(43) Veröffentlichungstag der Anmeldung: 04.10.2017
(73) Patentinhaber: MAN Truck & Bus SE, 80995 München (DE)
(72) Erfinder: Raab, Gottfried, 4320 Perg (AT); Klammer, Josef, 4400 Steyr (AT)
(74) Vertreter: v. Bezold & Partner Patentanwälte - PartG mbB

(56) Entgegenhaltungen:
- EP-A1- 1 447 542
- WO-A1-2010/121710
- WO-A1-2013/091669
- DE-A1- 10 204 066
- DE-A1- 19 853 634
- DE-A1-102007 026 869
- GB-A- 2 065 224
- US-A- 3 452 610

## Beschreibung

Die Erfindung betrifft eine Brennkraftmaschine mit einer Anordnung von Nebenaggregaten.

Moderne Brennkraftmaschinen weisen zahlreiche Nebenaggregate auf. Neben solchen Nebenaggregaten, die unmittelbar für den Betrieb des Fahrzeuges erforderlich sind, wie z. B. Lichtmaschine, Wasserpumpe oder Kompressor, werden zunehmend solche Nebenaggregate eingesetzt, die den Komfort des Fahrzeugs verbessern sollen, z. B. Klimakompressoren, Lenkhilfepumpen usw. Üblicherweise werden diese Nebenaggregate am Fahrzeugmotor befestigt und werden von diesem über Kettentriebe, Riementriebe, Zahnradtriebe oder einer Kombination davon angetrieben. Je mehr Nebenaggregate in einem Fahrzeug vorgesehen sind, desto schwieriger wird es räumlich, diese in geeigneter Weise am Fahrzeugmotor zu befestigen, und desto aufwändiger und komplizierter werden die erforderlichen Riementriebe. Eine solche Vielzahl von Nebenaggregaten und Riementrieben o. Ä. bereitet nicht nur wegen des heutzutage im Allgemeinen sehr knapp bemessenen Motorraums Schwierigkeiten. Auch die Montage und spätere Wartung erfordern einen hohen Aufwand und große Sorgfalt, um z. B. Quietschgeräusche oder vorzeitigen Verschleiß infolge von Fluchtungsfehlern der Riemenscheiben oder infolge von nicht vorschriftsmäßig gespannten Riemen o. Ä. auszuschließen.

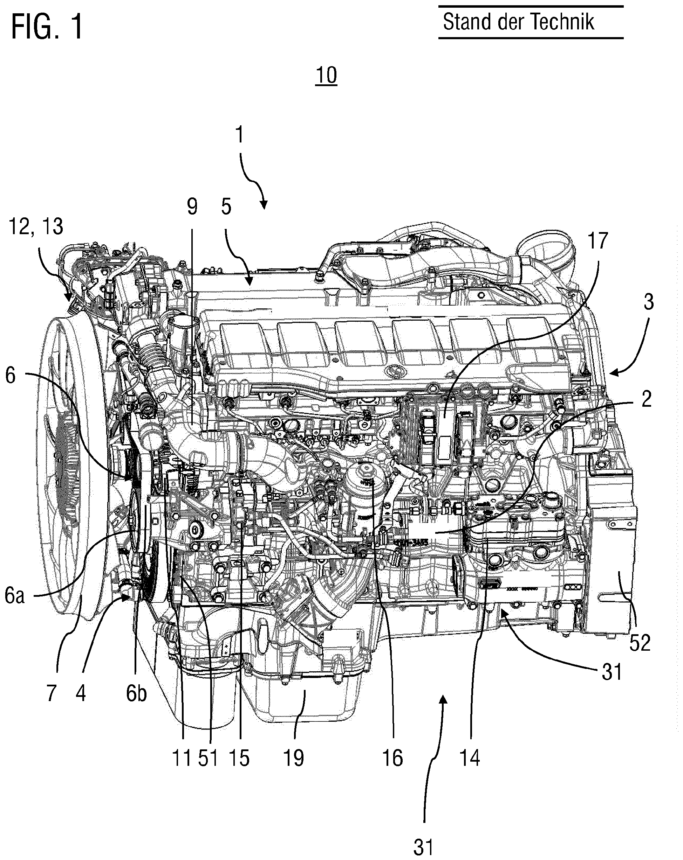

In Figur 1 ist eine perspektivische Ansicht einer aus dem Stand der Technik bekannten Anordnung 10 von Nebenaggregaten eines Verbrennungsmotors gezeigt. Hierbei handelt es sich um einen als Dieselbrennkraftmaschine ausgeführten Verbrennungsmotor 1 eines Nutzfahrzeugs. Das Kurbelgehäuse 2 ist unten mit einer Ölwanne 19 abgeschlossen. Die Oberseite des Verbrennungsmotors 1 ist mit dem Bezugszeichen 5 bezeichnet. An der vorderen Stirnseite 4 des Verbrennungsmotors 1 befindet sich ein von der Brennkraftmaschine angetriebenes Riemengetriebe 6, nachfolgend kurz als Riementrieb bezeichnet. In der perspektivischen Ansicht der Figur 1 ist mit dem Bezugszeichen 6b der Riemen und mit dem Bezugszeichen 6a eine Antriebsriemenscheibe bezeichnet. Der Riementrieb treibt in an sich bekannter Weise einen 24V-Generator (Lichtmaschine) 11, eine Wasserpumpe 12 und einen Kältemittelkompressor 13 der Klimaanlage an. Wasserpumpe 12 und Kältemittelkompressor 13 sind ebenfalls hinter dem Lüfter 7 an der vorderen Stirnseite 4 angeordnet, jedoch auf dem in Figur 1 nicht gezeigten hinteren Teil der vorderen Stirnseite 4 und somit auf der dem Generator 11 gegenüberliebenden Seite der vorderen Stirnseite 4.

An der vorderen Stirnseite 4 befindet sich ferner ein von der Brennkraftmaschine angetriebener vorderer Rädertrieb (Zahnradgetriebe), dessen Zahnräder von dem vorderen Steuergehäuse 51 umhaust sind und somit in der Darstellung der Figur 1 nicht erkennbar sind. Der vordere Rädertrieb treibt den an der vorderen Stirnseite 4 angeordneten Lüfter 7, eine seitlich am Kurbelgehäuse 2 angeordnete Kraftstoff-Hochdruckpumpe 15 sowie eine Ölpumpe an. Ferner ist ein hinterer Rädertrieb vorhanden, d. h. ein an der getriebeseitigen Stirnseite 3 des Verbrennungsmotors 1 angeordneter Rädertrieb, der von der Brennkraftmaschine angetrieben wird. Der hintere Rädertrieb ist ebenfalls von einem hinteren Steuergehäuse 52 umhaust und daher in der Darstellung der Figur 1 nicht sichtbar.

Der hintere Rädertrieb treibt einen Luftverdichter 14, auch als Luftpresser bezeichnet, an, der als Kolbenverdichter ausgeführt ist. Der Luftverdichter 14 versorgt ein Druckluftsystem des Nutzfahrzeugs mit Druckluft. Der Luftverdichter ist an einem unteren hinteren Abschnitt der seitlichen Wandung des Kurbelgehäuses befestigt. An dieser Stelle befindet sich eine Öffnung im Kurbelgehäuse 2, über die der Leistungsfluss zwischen Druckluftverdichter 4 und dem hinteren Rädertrieb erfolgt.

Der hintere Rädertrieb treibt ferner eine Lenkhilfepumpe an, die am Luftverdichter 14 angeordnet ist. Der hintere Räderabtrieb treibt ferner in bekannter Weise den Nockenwellenantrieb an und weist einen Nebenabtrieb (engl. Power Take-off) auf, zum Antrieb von z. B. einer Hydraulikpumpe für Aufbauten des Nutzfahrzeugs (jeweils nicht dargestellt).

Durch eine derartige Ausgestaltung wird der verfügbare freie Bauraum nahezu vollständig zur Anordnung solcher Nebenaggregate genutzt, die für konventionell ausgestattete Kraftfahrzeuge notwendig sind. Probleme ergeben sich jedoch bei einer Ausrüstung mit weiteren Nebenaggregaten, beispielsweise falls das Nutzfahrzeug mit einem System zur Abwärmenutzung (engl. Waste Heat Recovery (WHR)) ausgestattet werden soll, bei dem z. B. eine Expansionsmaschine zum Einsatz kommen soll.

Vor diesem Hintergrund liegt der Erfindung die Aufgabe zugrunde, eine Brennkraftmaschine mit einer Anordnung von Nebenaggregaten bereitzustellen, mit der Nachteile herkömmlicher Anordnungen vermieden werden können. Der Erfindung liegt insbesondere die Aufgabe zugrunde, eine Brennkraftmaschine mit einer Anordnung von Nebenaggregaten bereitzustellen, die wenig Bauraum beansprucht, mit geringem Aufwand eine Modifizierung einer Brennkraftmaschine für Anwendungen mit zusätzlichen Nebenaggregaten ermöglicht und die einen effizienteren, geräuschärmeren und wartungsärmeren Betrieb der Brennkraftmaschine ermöglicht.

Diese Aufgaben werden durch eine Brennkraftmaschine mit einer Anordnung von Nebenaggregaten mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Brennkraftmaschine mit einer Anordnung von Nebenaggregaten bereitgestellt, insbesondere eine Antriebsanordnung der Nebenaggregate. Die Brennkraftmaschine kann eine Hubkolben-Brennkraftmaschine sein, z. B. ein als Diesel-Brennkraftmaschine ausgeführter Verbrennungsmotor. Die Brennkraftmaschine kann ein Verbrennungsmotor eines Kraftfahrzeugs, insbesondere eines Nutzfahrzeugs, sein. Die Nebenaggregate umfassen eine generatorisch und vorzugsweise auch motorisch betreibbare elektrische Maschine sowie eine Expansionsmaschine. Die Expansionsmaschine kann eine Expansionsmaschine eines Abwärmenutzungssystems zur Umwandlung von Abwärme der Brennkraftmaschine oder eines Motorstaubremssystems in nutzbare Energie mittels eines Dampfkreislaufs (engl. Waste-Heat-Recovery (WHR)-Kreislaufs) sein.

Die Anordnung von Nebenaggregaten umfasst ferner eine Gruppe von Nebenaggregaten. Diese Gruppe wird nachfolgend zur besseren Abgrenzung von der Gesamtheit der Nebenaggregate als erste Gruppe bezeichnet. Diese erste Gruppe kann eine Wasserpumpe, einen Kältemittelkompressor, eine Kraftstoff-Vorförderpumpe, eine Kraftstoff-Hochdruckpumpe, eine Ölpumpe, eine Lenkhilfepumpe und weitere Nebenaggregate umfassen. Beispielsweise kann die erste Gruppe auch ohne Kältemittelkompressor ausgeführt sein.

Die Erfindung umfasst die allgemeine technische Lehre, die Anordnung von Nebenaggregaten riemensantriebsfrei, d. h. ohne Riemenantrieb, auszuführen. An der Brennkraftmaschine ist somit kein Riemenantrieb vorgesehen, um die Nebenaggregate anzutreiben. Hierbei sind die einzelnen Nebenaggregate der ersten Gruppe elektrisch angetrieben und/oder von einem mit der Brennkraftmaschine in Wirkverbindung stehenden Rädertrieb (Zahnradgetriebe) mechanisch angetrieben sind. Mit anderen Worten kann die Wasserpumpe elektrisch oder von dem Rädertrieb mechanisch angetrieben sein. Entsprechendes gilt für den Kältemittelkompressor, die Kraftstoff-Vorförderpumpe, die Kraftstoff-Hochdruckpumpe, die Ölpumpe, und die Lenkhilfepumpe. Mit anderen Worten sind diese Nebenaggregate entweder elektrifiziert ausgeführt, d. h. elektrisch antreibbar, oder ohne Riemenantrieb und nur durch einen Rädertrieb der Brennkraftmaschine antreibbar. Bei dem Rädertrieb handelt es sich vorzugsweise um den hinteren Rädertrieb der Brennkraftmaschine, d. h. den Rädertrieb, der am getriebeseitigen Ende der Brennkraftmaschine angeordnet ist. Die elektrische Maschine und die Expansionsmaschine stehen über den Rädertrieb mit der Kurbelwelle der Brennkraftmaschine in Wirkverbindung. Die Anordnung kann ferner einen weiteren Nebenabtrieb (engl. Power Take-Off) sowie einen Nockenwellenantrieb aufweisen, die ebenfalls von dem Rädertrieb mechanisch angetrieben werden können.

Ein Vorzug der erfindungsgemäßen Anordnung der Nebenaggregate liegt darin, dass der vergleichsweise große Bauraum und die Bauteilekosten, die für einen Riementrieb benötigt werden, eingespart werden können. Ferner entfällt der Wartungsaufwand für einen Riemenantrieb. Durch die Elektrifizierung zumindest eines Teils der Nebenaggregate wird die Flexibilität bei der Anordnung der Nebenaggregate erhöht. Ein elektrifiziertes Nebenaggregat kann flexibler am Kurbelgehäuse angeordnet werden, da es nicht an einer Stelle angeordnet sein muss, wo eine mechanische Wirkverbindung zur Kurbelwelle vorgesehen ist, z. B. in Form einer Schnittstelle zum Rädertrieb. Ein elektrifiziertes Nebenaggregat muss ferner auch nicht in unmittelbarer Nähe zum Kurbelgehäuse angeordnet werden, sondern kann auch z. B. am Fahrzeugrahmen angeordnet werden. Ein weiterer Vorteil ist, dass lediglich ein Rädertrieb ausreichend ist, um die nicht-elektrifizierten Nebenaggregate mechanisch anzutreiben. Ein weiterer Vorteil ist, dass kein zwischen einem Lüfter und vorderer Stirnseite der Brennkraftmaschine angeordneter Riementrieb den durch den Lüfter erzeugten Luftstrom teilweise blockieren kann.

Der Rädertrieb kann beispielsweise an einem getriebeseitigen Endbereich bzw. an einem in Fahrtrichtung des Kraftfahrzeugs gesehenen hinteren Endbereich der Brennkraftmaschine angeordnet sein. Die Antriebsanordnung kann somit so ausgeführt sein, dass kein Rädertrieb im Bereich der vorderen Stirnseite der Brennkraftmaschine bzw. der Stirnseite, an der der Lüfter vorgesehen ist, angeordnet ist und lediglich nur ein Rädertrieb im Bereich der hierzu gegenüberliegenden Stirnseite. Dies bietet ferner den Vorteil, dass die Mehrzahl der Nebenaggregate im hinteren Bereich der Brennkraftmaschine und damit hinter der Vorderachse des Fahrzeuges angeordnet sind und die Anordnung somit weniger "kopflastig" wird, was insbesondere bei Sattelzugmaschinen von Vorteil ist. Ein weiterer Vorteil lediglich eines Rädertriebes ist das geringere Reibmoment des Verbrennungsmotors.

Es ist besonders vorteilhaft, wenn die Wasserpumpe, der Kältemittelkompressor und die Kraftstoff-Vorförderpumpe jeweils elektrisch angetrieben sind, insbesondere wenn diese Nebenaggregate rein elektrisch angetrieben sind.

Aus Sicherheitsgründen und zur Vermeidung von Motorschäden ist es vorteilhaft, wenn dagegen die Kraftstoff-Hochdruckpumpe, die Lenkhilfepumpe und/oder die Ölpumpe mechanisch von dem Rädertrieb angetrieben sind, wobei die Ölpumpe und die Lenkhilfepumpe zusätzlich kombiniert elektrisch und mechanisch angetrieben sein können. Die Lenkhilfepumpe kann jedoch auch elektrifiziert sein. Beispielsweise können die Lenkhilfepumpe und die Ölpumpe jeweils in einem Hauptförderbetrieb elektrisch angetrieben sein und in einem Notbetrieb mechanisch angetrieben sein.

Die elektrifizierten Nebenaggregate können dabei über ein Bordnetz oder Teilbordnetz, beispielsweise ein 12V, 24V oder 48V-Bordnetz, mit elektrischer Leistung versorgt werden. Das Bordnetz kann ein Bordnetz eines zumindest teilweise elektrisch antreibbaren Fahrzeugs sein.

Die Anordnung von Nebenaggregaten kann ferner einen Lüfter zur Motorkühlung als weiteres Nebenaggregat aufweisen. Der Lüfter kann insbesondere ein mechanisch angetriebener Lüfter sein. Gemäß dieser Ausführungsform wird vorgeschlagen, den Lüfter koaxial zur Kurbelwelle anzuordnen, insbesondere an einer vorderen Stirnseite der Brennkraftmaschine. Die vordere Stirnseite der Brennkraftmaschine ist die der Fahrzeugfrontseite zugewandte bzw. einer der Getriebeseite der Brennkraftmaschine gegenüberliegende Stirnseite. Die getriebeseitige Stirnseite der Brennkraftmaschine wird nachfolgend auch als hintere Stirnseite bezeichnet. Der Lüfter kann beispielsweise auf der Kurbelwelle oder einer Verlängerung der Kurbelwelle der Brennkraftmaschine befestigt sein und vorzugsweise über ein Schaltelement (Visco-Kupplung) drehfest mit der Kurbelwelle gekoppelt sein.

Es ist besonders vorteilhaft, wenn der Rädertrieb zum Antrieb derjenigen Nebenaggregate, die mechanisch angetrieben sind, und der Lüfter an gegenüberliegenden Endbereichen der Brennkraftmaschine angeordnet sind. Dadurch können kein zwischen dem Lüfter und vorderer Stirnseite der Brennkraftmaschine angeordneter Rädertrieb oder von diesem angetriebene Nebenaggregate den durch den Lüfter erzeugten Luftstrom zur Kühlung der Brennkraftmaschine teilweise blockieren.

Die elektrifizierte Wasserpumpe kann an einer vorderen Stirnseite der Brennkraftmaschine oder an einer seitlichen Wandung des Kurbelgehäuses befestigt sein. Dadurch beansprucht die Wasserpumpe keinen Bauraum im hinteren Bereich der Brennkraftmaschine, der zur Anordnung der mechanisch angetriebenen Nebenaggregate am hinteren Rädertrieb genutzt werden kann und ist in der Nähe der Kühlmittelführenden Bauteile am Fahrzeug angeordnet. Ferner kann der Kältemittelkompressor fahrzeugfest befestigt sein. Diese Anordnung gibt Bauraum am Kurbelgehäuse frei, um dort andere Nebenaggregate anordnen zu können und erfordert keine flexiblen Leitungen zum Übertritt von fahrzeugfesten auf motorfeste Bauteile der Klimaanlage.

Gemäß einer weiteren bevorzugten Ausführungsvariante ist die generatorisch und vorzugsweise auch motorisch betreibbare elektrische Maschine seitlich an der Brennkraftmaschine, insbesondere an einer seitlichen Wandung des Kurbelgehäuses oder eines Steuergehäuses der Brennkraftmaschine, angeordnet. Als Steuergehäuse wird ein stirnseitig am Kurbelgehäuse befestigtes Gehäuse bezeichnet, das den Rädertrieb zumindest teilweise umhaust. Die beiden seitlichen Wandungen des Kurbelgehäuses verlaufen zwischen den beiden Stirnflächen und sind in Vertikalrichtung in Richtung einer Ölwanne geführt, die an einem unteren Bereich des Kurbelgehäuses vorgesehen ist. Weiter vorzugsweise kann die elektrische Maschine an einem getriebeseitigen seitlichen Endbereich des Kurbelgehäuses der Brennkraftmaschine angeordnet sein, insbesondere an einem getriebeseitigen Bereich der seitlichen Wandung des Kurbelgehäuses oder Steuergehäuses. Durch diese Anordnung kann die elektrische Maschine beispielsweise an einen mit dem hinteren Rädertrieb in Wirkverbindung stehenden Nebentrieb der Brennkraftmaschine angeschlossen werden.

Unter dem Begriff Nebentrieb wird ein Nebenantrieb und/oder ein Nebenabtrieb verstanden. Der Nebentrieb kann als Nebenabtrieb (engl. Power-Take-Off) fungieren, um ein oder mehrere Nebenaggregate anzutreiben. Hierbei ist ein Leistungsfluss über den Nebentrieb aus der Brennkraftmaschine heraus gerichtet. Der Nebentrieb kann auch als Nebenantrieb fungieren, wobei ein Leistungsfluss über den Nebentrieb zur Brennkraftmaschine hin fließt. Ein Nebentrieb im Sinne dieser Erfindung stellt somit eine Schnittstelle an der Brennkraftmaschine, z. B. am Verbrennungsmotor, dar, über die ein Nebenaggregat oder sonstiges Gerät mit der Brennkraftmaschine mechanisch wirkverbindbar ist, um z. B. von der Kurbelwelle angetrieben zu werden oder um mechanische Energie der Kurbelwelle zuzuführen.

Gemäß einer besonders bevorzugten Ausgestaltungsform umfasst die Anordnung eine Verdichtereinrichtung zur Drucklufterzeugung eines Druckluftsystems, beispielsweise um eine Druckluftbremse des Fahrzeugs mit Druckluft zu versorgen. Bei dieser Verdichtereinrichtung weist mindestens ein Zylinder der Brennkraftmaschine ein im Zylinderkopf angeordnetes steuerbares Ventil auf, über das in einem geöffnetem Zustand des Ventils eine Verbindung von dem Brennraum des mindestens einen Zylinders zu einem Druckluftsystem herstellbar ist und über das einem Druckluftspeicher des Druckluftsystems komprimiertes Gas aus dem Brennraum zuführbar ist.

Dies bietet den besonderen Vorzug, dass hierdurch auf einen herkömmlichen, über einen Nebenabtrieb der Brennkraftmaschine angetriebenen Luftverdichter verzichtet werden kann. Dieser hierdurch freiwerdende Nebenabtrieb und Bauraum kann beispielsweise genutzt werden, um eine Wirkverbindung zwischen der elektrischen Maschine und der Kurbelwelle herzustellen. Eine Verdichtereinrichtung, die zur Drucklufterzeugung komprimierte Luft aus einem Zylinder der Brennkraftmaschine gezielt entnimmt, ist an sich aus dem Stand der Technik bekannt und daher an dieser Stelle nicht weiter beschrieben. Beispielhaft wird auf die Druckschriften DE 199 02 052 C2, DE 197 35 822 C1, DE 101 35 363 A1, DE 43 09 860 C1 oder DE 31 18 269 A1 verwiesen, die gattungsgemäße Verdichtereinrichtungen beschreiben.

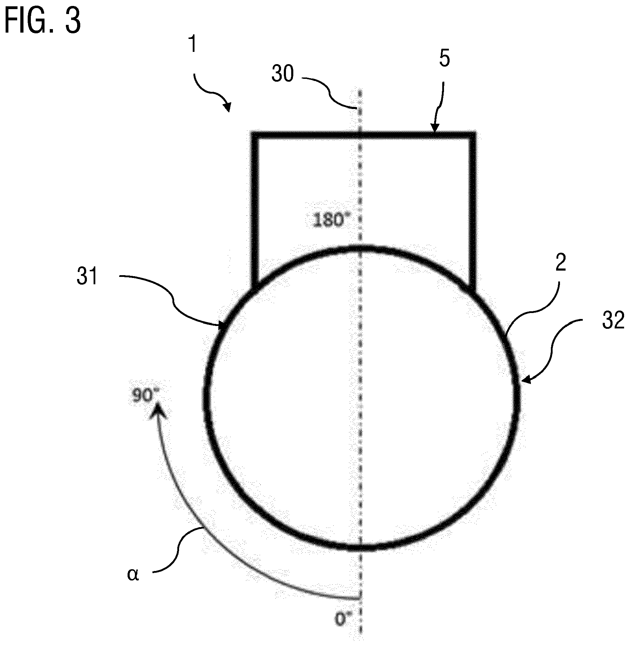

Um den verfügbaren Bauraum an der Brennkraftmaschine, insbesondere bei Nutzfahrzeugen, möglichst gut auszunutzen, können bestimmte Nebenaggregate bzw. Komponenten in bestimmten vorteilhaften Winkelbereichen am Kurbelgehäuse angeordnet sein, wobei ein Winkel von einer hinteren Stirnseite des Kurbelgehäuses aus in Richtung der Brennkraftmaschine gesehen und ausgehend von einem Winkel von 0° an der Unterseite des Kurbelgehäuses im Uhrzeigersinn nach oben bestimmt ist. Die nachfolgenden optionalen Winkelbereiche der Komponentenanordnung sind in Figur 3 dargestellt und so beschrieben, als wenn man auf den Verbrennungsmotor von hinten (getriebeseitig) schaut. Der Winkel ist somit in Bezug auf eine zur Kurbelwelle parallele Vertikalebene festgelegt, so dass der Winkelbereich von 0° bis 360° einen senkrechten Kreis zu dieser Vertikalebene aufspannt. Ein Winkel von 0° entspricht somit einer Anordnung unten und mittig am Kurbelgehäuse; ein Winkel von 180° entspricht einer Anordnung oben mittig am Kurbelgehäuse; und ein Winkel von 90° oder 270° bzw. -90° entspricht einer Anordnung an der seitlichen Wandung des Kurbelgehäuses.

Eine vorteilhafte Anordnung der generatorisch und vorzugsweise auch motorisch betreibbaren elektrischen Maschine liegt an der seitlichen Wandung des Kurbelgehäuse in einem Winkelbereich von 110° bis 160° oder von 200° bis 250°, da hier der Bauraum bei einem Nutzfahrzeugmotor nicht von einem Fahrzeugrahmen oder der Fahrzeugachse beansprucht wird und die Anordnung auch nicht die Bodenfreiheit einschränkt.

Eine vorteilhafte Anordnung der Kraftstoffpumpe liegt an einer seitlichen Wandung des Kurbelgehäuses in einem Winkelbereich von 60° bis 120° oder von 240° bis 300°. Eine vorteilhafte Anordnung der Ölpumpe liegt in einem Winkelbereich von -90° bis 90°. Ein Winkel von -90° entspricht 270°. Eine vorteilhafte Anordnung eines vom hinteren Rädertrieb angetriebenen Nebenabtriebs (engl. Power-Take-Off), z. B. zum Antrieb einer Hydraulikpumpe für Aufbauten des Nutzfahrzeugs, liegt im Bereich von 150° bis 240°.

Gemäß einer besonders bevorzugten Ausführungsform besteht im Rahmen der Erfindung die Möglichkeit, dass die Anordnung von Nebenaggregaten eine Welle umfasst, die über den Rädertrieb mit der Kurbelwelle der Brennkraftmaschine in Wirkverbindung steht und zwei Wellenenden, insbesondere zwei freie Wellenenden, aufweist. Die zwei Wellenenden sind jeweils zur Verbindung mit einer leistungsgebenden und/oder leistungsnehmenden Maschine, insbesondere einer außerhalb vom Kurbelgehäuse angeordneten leistungsgebenden und/oder leistungsnehmenden Maschine, ausgebildet. Mit anderen Worten weist die Welle ein erstes Wellenende auf, das so angeordnet ist, dass es mit einer ersten außerhalb vom Kurbelgehäuse angeordneten leistungsgebenden und/oder leistungsnehmenden ersten Maschine verbindbar ist. Ferner weist die Welle ein zweites Wellenende auf, das so angeordnet ist, dass es mit einer außerhalb vom Kurbelgehäuse angeordneten leistungsgebenden und/oder leistungsnehmenden zweiten Maschine verbindbar ist. Die beiden Maschinen können somit zueinander fluchtend an gegenüberliegenden Enden der Welle mit der Welle in Wirkverbindung gebracht werden. An einer in Axialrichtung von den Wellenenden versetzt angeordneten Stelle steht die Welle in Wirkverbindung mit der Brennkraftmaschine. Hierdurch wird mittels der Welle ein Nebentrieb mit einer T-förmigen Leistungsverzweigung bereitgestellt. Die Wirkverbindung der Welle mit dem Rädertrieb kann somit nicht an einem Endbereich der Welle erfolgen, sondern an einem Wellenabschnitt, der beabstandet von den freien Enden ist. Eine an einer Nebentriebsschnittstelle angeordnete Welle mit zwei freien Enden bietet den besonderen Vorzug, dass die Nebentriebsschnittstelle zur Anordnung von zwei Nebenaggregaten genutzt werden kann. So können bauraumsparend flexibel mehrere Bestückungsvarianten in Bezug auf Nebenaggregate realisiert werden, je nachdem, welche leistungsgebenden und/oder leistungsnehmenden Maschine an der Welle angeschlossen werden und ob an beiden oder nur an einem freien Ende der Welle eine solche Maschine angeschlossen ist.

Beispielsweise kann eines der Wellenenden mit einer Expansionsmaschine verbunden sein, insbesondere einer Expansionsmaschine, die Teil eines Abwärmenutzungssystems zur Umwandlung von Abwärme der Brennkraftmaschine oder eines Motorstaubremssystems in nutzbare Energie ist, vorzugsweise mittels eines Dampfkreislaufs. Bei einem solchen Abwärmenutzungssystem wird ein Kreislaufmedium mit Hilfe eines Dampfkreislaufs, z. B. eines ORC-Prozesses (Organic Rankine Cycle), auf ein hohes Druckniveau gebracht, in einem Verdampfer verdampft und überhitzt. Dieser Dampf wird einer Expansionsmaschine zugeführt, die die im Dampf gespeicherte Energie in nutzbare Energie umwandelt. Nach der Expansionsmaschine wird der Dampf wieder verflüssigt und einer Speisepumpe zugeführt.

Ferner kann eines der Wellenenden mit einer motorisch und generatorisch betreibbaren elektrischen Maschine verbunden sein, z. B. einem Motor/Generator eines Bordteilnetzes mit 12V, 24V oder 48V Nennspannung. Eines der freien Wellenenden kann auch frei bleiben, d. h. nicht bestückt sein. Ferner können beide Wellenenden mit einer generatorisch und vorzugsweise auch motorisch betreibbaren elektrischen Maschine verbunden sein.

Sind sowohl Expansionsmaschine als auch der Motor/Generator mit der Welle verbunden, bietet diese Anordnung den Vorzug, dass die Expansionsmaschine und der Generator sowohl untereinander als auch jeweils mit dem Verbrennungsmotor über die Welle wirkverbindbar sind, um eine wahlweise elektrische Nutzung und mechanische Nutzung der Energie der Expansionsmaschine zu ermöglichen.

Ein besonderer Vorzug dieser Variante liegt somit darin, dass mit der erfindungsgemäß angeordneten Welle verschiedene Bestückungsvarianten realisierbar sind. So kann für Fahrzeugvarianten, die mit einem Abwärmenutzungssystem unter Verwendung eines Dampfkreislaufs ausgestattet werden sollen, ein Ende der Welle mit einer Expansionsmaschine bestückt werden, während das andere Ende mit einem Motor/Generator bestückt wird. Für Fahrzeugvarianten, die ohne Abwärmenutzungssystem bereitgestellt werden sollen, kann eines der freien Enden frei, d. h. unbestückt, bleiben und das andere mit dem Motor/Generator bestückt werden. Für Anwendungen mit hohem Strombedarf, z. B. bei Bussen, kann auch an jedem freien Ende der Welle jeweils ein Motor/Generator angeschlossen sein. In jeder der beschriebenen Varianten kann der Motor/Generator je nach Marktanforderung wahlweise als Motor/Generator mit 12V-Betriebsspannung, 24V-Betriebsspannung, 48V-Betriebsspannung oder als Hochvoltgenerator (z.B. 400V) ausgeführt sein.

Im Rahmen der Erfindung kann ferner wenigstens eine Kupplung oder ein aktives oder passives Schaltelement vorgesehen sein, um die Wirkverbindung zwischen der am einen Wellenende angeschlossenen Maschine und der am anderen Wellenende angeschlossenen Maschine wahlweise herzustellen oder zu trennen und/oder um die Wirkverbindung der Welle mit dem Verbrennungsmotor wahlweise herzustellen oder zu trennen. Alternativ kann keine solche Kupplung oder kein Schaltelement vorgesehen sein, so dass die Welle mit dem Verbrennungsmotor fest und/oder nicht-schaltbar, insbesondere permanent, wirkverbunden ist und/oder dass die an beiden freien Ende angeschlossenen Maschinen fest und/oder nicht-schaltbar, insbesondere permanent, wirkverbunden sind.

Gemäß einer besonders bevorzugten Ausführungsform ist die Welle in einem Gehäuse gelagert. Gemäß einer Variante dieser Ausführungsform kann dieses Gehäuse am Kurbelgehäuse, insbesondere an einer Außenseite des Kurbelgehäuses, befestigt sein oder als Teil des Kurbelgehäuses ausgebildet sein. Das Gehäuse kann beispielweise seitlich und außerhalb am Kurbelgehäuse befestigt sein. Gemäß einer anderen Variante kann dieses Gehäuse an einem Steuergehäuse befestigt sein oder als Teil des Steuergehäuses ausgebildet sein. Das Steuergehäuse ist, wie bereits erwähnt, ein Gehäuse, in dem ein in Wirkverbindung mit der Brennkraftmaschine stehender Rädertrieb angeordnet ist. Das Kurbelgehäuse ist üblicherweise zu einer Stirnseite hin offen. Das Steuergehäuse ist an der Stirnseite angeordnet und schließt so das Kurbelgehäuse an einer Stirnseite ab. Das Steuergehäuse kann das hintere Steuergehäuse sein, in dem der hintere, d. h. getriebeseitige, Rädertrieb untergebracht ist. Dieses Gehäuse kann ferner sowohl am Kurbelgehäuse als auch an dem Steuergehäuse befestigt sein. Die Welle ist somit über dieses Gehäuse am Kurbelgehäuse und/oder Steuergehäuse befestigt. Das Gehäuse wird daher nachfolgend als Zwischengehäuse bezeichnet. Diese Varianten bieten den Vorzug, dass bestehende Formen und Ausführungen des Kurbelgehäuses nicht geändert werden müssen, um die Welle anzuordnen. Stattdessen wird ein separates Zwischengehäuse außen am Kurbelgehäuse oder Steuergehäuse befestigt.

Gemäß einer weiteren Ausführungsform besteht jedoch auch die Möglichkeit, die Welle in einem Gehäuseabschnitt des Kurbelgehäuses zu lagern. Gemäß einer anderen Möglichkeit kann die Welle in einem Gehäuseabschnitt des Steuergehäuses gelagert sein. Das Steuergehäuse kann das Steuergehäuse sein, in dem der hintere, d. h. getriebeseitige, Rädertrieb, der in Wirkverbindung mit der Brennkraftmaschine steht, gelagert ist. Diese Varianten bieten den Vorteil, dass auf ein separates Zwischengehäuse verzichtet werden kann.

Der Gehäuseabschnitt und das Zwischengehäuse können im Bereich der Wellenenden jeweils eine Öffnung aufweisen, um eine außerhalb vom und/oder am Kurbelgehäuse angeordnete Maschine an eines der Wellenenden anzuschließen.

Das Zwischengehäuse kann an einer seitlichen Wandung des Kurbelgehäuses der Brennkraftmaschine oder an der hinteren, d. h. getriebeseitigen Stirnseite des Verbrennungsmotors angeordnet sein. Die beiden seitlichen Wandungen des Kurbelgehäuses verlaufen zwischen den beiden Stirnflächen und sind in Vertikalrichtung in Richtung einer Ölwanne geführt, die an einem unteren Bereich des Kurbelgehäuses vorgesehen ist. Weiter vorzugsweise kann das Zwischengehäuse an einem getriebeseitigen seitlichen Endbereich des Kurbelgehäuses der Brennkraftmaschine angeordnet sein, insbesondere an einem getriebeseitigen Bereich der seitlichen Wandung des Kurbelgehäuses oder Steuergehäuses. Durch diese Anordnung kann die Welle beispielsweise an einen mit der Kurbelwelle in Wirkverbindung stehenden hinteren Rädertrieb der Brennkraftmaschine angeschlossen werden.

Ferner kann die Welle mittels mindestens einem Radial- und/oder mindestens einem Axiallager in dem Zwischengehäuse oder dem Gehäuseabschnitt gelagert sein. Die Radial- und/oder Axiallager nehmen die auf die Welle wirkenden Radial- und/oder Axialkräfte auf, die beispielsweise durch die mechanische Wirkverbindung der Welle mit dem Rädertrieb verursacht werden. Durch eine derartige Anordnung können die meist lebensdauerbeschränkenden Kräfte auf die Lager der Nebenaggregate verringert oder vermieden werden.

Gemäß einem weiteren möglichen Aspekt der Erfindung kann an gegenüberliegenden Stirnseiten des Zwischengehäuses oder des Gehäuseabschnitts jeweils eine Befestigungsschnittstelle zur verdrehgesicherten Befestigung eines Gehäuses der leistungsgebenden und/oder leistungsnehmenden Maschine vorgesehen sein. Jede Befestigungsschnittstelle ist somit einem Wellenende zugeordnet. Die Stirnseiten des Zwischengehäuses sind jeweils einem der freien Wellenenden zugeordnet und stehen im Wesentlichen senkrecht auf der Drehachse der Welle. Das Zwischengehäuse oder der Gehäuseabschnitt, in dem die Welle gelagert ist, kann somit eine Mehrfachfunktion ausüben: Das Zwischengehäuse kann zur gelagerten Aufnahme der Welle und zur Befestigung der Maschinengehäuse der mit der Welle in Wirkverbindung stehenden Maschinen dienen sowie einen Schutz der Welle von Verschmutzung und mechanischer Beschädigung bereitstellen, sowie in der gleichzeitigen Ausführung als Steuergehäuse den hinten Rädertrieb und das Schwungrad umhausen.

Die Welle kann so angeordnet sein, dass ihre Drehachse parallel oder im Wesentlichen parallel zur Kurbelwellenachse verläuft. Die freien Wellenenden können zur Verbindung mit jeweils einer leistungsgebenden und/oder leistungsnehmenden Maschine jeweils ein zweckmäßig ausgeführtes Anschlusselement aufweisen. Das Anschlusselement kann beispielsweise als Verbindungsflansch, Innenverzahnung, Außenverzahnung, Kegelstumpf, Keilwellenprofil, Zahnwellenprofil oder als jede andere Welle-Nabe-Verbindung ausgeführt sein.

Gemäß einer weiteren Variante ist die Welle auf einer Kaltseite der Brennkraftmaschine angeordnet. Dies ist besonders vorteilhaft, wenn an einem freiem Wellenende der Welle die Expansionsmaschine angeschlossen ist, da Kreisläufe zur Abwärmenutzung (WHR-Kreisläufe) üblicherweise mit einem entzündlichen Fluid, z. B. basierend auf Ethanol, arbeiten, so dass bei einem Leck dieses Fluid nicht unmittelbar auf die Heißseite des Motors gelangt. Ebenso ist es vorteilhaft, wenn die Kraftstoffpumpe auf der Kaltseite der Brennkraftmaschine angeordnet ist.

Brennkraftmaschinen haben bekanntermaßen eine Heißseite, die im Vergleich zur Kaltseite eine höhere Temperatur im Betrieb der Brennkraftmaschine aufweist. Die Heißseite der Brennkraftmaschine ist beispielsweise diejenige Seite der Brennkraftmaschine, an der ein Abgaskrümmer angeordnet ist. Auf der Heißseite kann auch der Abgasturbolader angeordnet sein. An der Kaltseite sind bei einem Nutzfahrzeug typischerweise die Ladeluftleitung und das Motorsteuergerät angeordnet.

Ferner besteht die Möglichkeit, dass die Anordnung eine Speisepumpe, ein Verteilerventil, ein Bypassventil und einen Kondensator aufweist, die an der Brennkraftmaschine angeordnet sind und die vorzugsweise Teil eines Abwärmenutzungssystems zur Umwandlung von Abwärme der Brennkraftmaschine oder eines Motorstaubremssystems in nutzbare Energie mittels eines Dampfkreislaufs sind. Die Speisepumpe, das Verteilerventil, das Bypassventil und der Kondensator können auf der Kaltseite der Brennkraftmaschine angeordnet sein, beispielsweise auf der Kaltseite an einer seitlichen Wandung des Kurbelgehäuses befestigt sein.

Die Erfindung betrifft ferner ein Kraftfahrzeug, insbesondere ein Nutzfahrzeug, mit einer Anordnung von Nebenaggregaten, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer aus dem Stand der Technik bekannten Anordnung von Nebenaggregaten an einem Verbrennungsmotors eines Nutzfahrzeugs;
- Figur 2: eine perspektivische Ansicht eines Verbrennungsmotors eines Nutzfahrzeugs mit einer Anordnung von Nebenaggregaten gemäß einem Ausführungsbeispiel der Erfindung;
- Figur 3: eine hintere Frontansicht auf dem Verbrennungsmotor zur Illustration von Winkelbereichen;
- Figur 4: eine Detailansicht eines Nebentriebs gemäß einer Ausführungsform der Erfindung; und
- Figuren 5A und 5B: Detailansichten eines Nebentriebs gemäß einer weiteren Ausführungsform der Erfindung.

Gleiche oder funktional äquivalente Elemente sind in allen Figuren mit denselben Bezugszeichen bezeichnet.

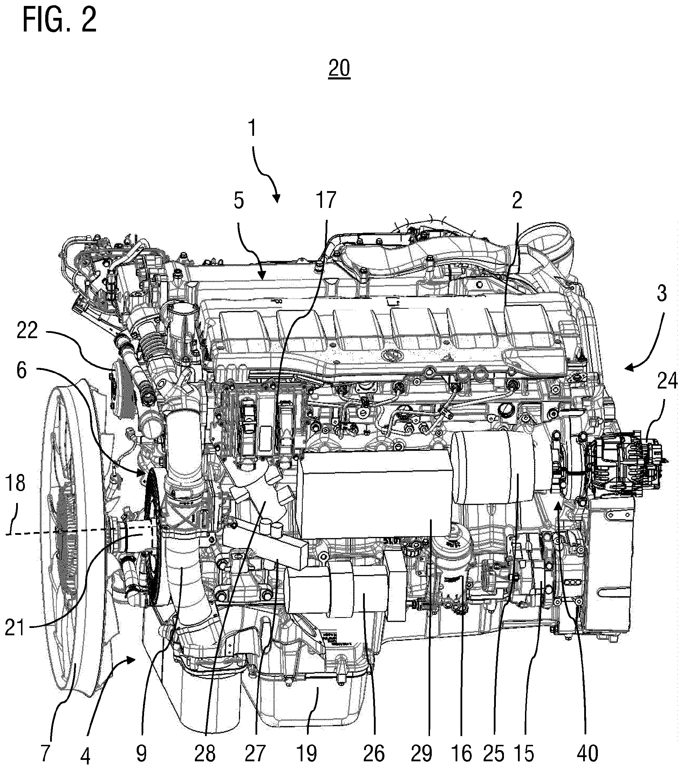

Figur 2 zeigt eine perspektivische Ansicht eines Verbrennungsmotors 1 eines Nutzfahrzeugs mit einer Anordnung 20 von Nebenaggregaten gemäß einem Ausführungsbeispiel der Erfindung. Der Verbrennungsmotor 1 ist als Dieselbrennkraftmaschine ausgeführt. Die Oberseite des Verbrennungsmotors 1 ist wie in Figur 1 mit dem Bezugszeichen 5, die vordere Stirnseite mit dem Bezugszeichen 4 und die hintere, getriebeseitige Stirnseite mit dem Bezugszeichen 3 bezeichnet. Die gezeigte Anordnung 20 der Nebenaggregate ist riemenantriebsfrei, d. h. ohne Riemenantrieb, ausgeführt. Auch der vordere Rädertrieb ist im Vergleich zur der in Figur 1 gezeigten Anordnung weggefallen.

Beispielhaft ausgehend von der in Figur 1 dargestellten bekannten Anordnung wird der Entfall des Riementriebs dadurch ermöglicht, dass die bisher vom Riementrieb angetriebenen Komponenten elektrifiziert werden oder in den hinteren Rädertrieb verlagert werden. Der Generator 24 wird nunmehr vom hinteren Rädertrieb angetrieben, wobei der Generator 24 im Vergleich zu dem Generator 14 der Figur 1 auch als Motor/Generator mit 12V, 24V oder 48V-Betriebsspannung ausgeführt sein kann. Der Generator 24 ist daher nicht nur generatorisch, sondern auch motorisch betreibbar und hierzu von einem elektrischen Energiespeicher eines elektrischen Bordnetzes (jeweils nicht dargestellt) mit elektrischer Energie für den motorischen Betrieb versorgbar. Der hintere Rädertrieb, der in an sich bekannter Weise ausgeführt sein kann, befindet sich im Bereich der hinteren Stirnseite 3 und ist vom Steuergehäuse 52 umhaust und daher in der Darstellung der Figur 2 nicht sichtbar.

Die Wasserpumpe 22 ist als elektrifizierte Komponente mit 48V-Betriebsspannung ausgelegt und motorfest an der Motorvorderseite 4 angeordnet. Der Kältemittelkompressor (in Figur 2 nicht dargestellt) ist ebenfalls als elektrifizierte Komponente mit 48V-Betriebsspannung ausgelegt und dadurch rahmenfest verbaubar. Der am Fahrzeugrahmen verbaute Kältemittelkompressor ist in Figur 2 nicht dargestellt. Die Lenkhilfepumpe (in Figur 2 nicht dargestellt) ist ebenfalls als elektrifizierte Komponente mit 48V-Betriebsspannung ausgelegt und dadurch rahmenfest verbaubar. Die am Fahrzeugrahmen verbaute Lenkhilfepumpe ist in Figur 2 nicht dargestellt. Beispielhaft ausgehend von der in Figur 1 dargestellten bekannten Anordnung wird der Entfall des vorderen Rädertriebs in der in Figur 2 gezeigten Ausführungsvariante dadurch ermöglicht, dass die bisher vom vorderen Rädertrieb angetriebenen Komponenten in den hinteren Rädertrieb verlagert werden - mit Ausnahme des Lüfters 7, der koaxial und drehfest zur Kurbelwelle auf einem Kurbelwellenstumpf 21 angeordnet ist. Die gestrichelte Linie 18 stellt die Mittelachse der Kurbelwelle dar. Die Hochdruck-Kraftstoffpumpe 15 und die Ölpumpe sind mechanisch von dem hinteren Rädertrieb angetrieben. Die Ölpumpe kann zusätzlich elektrisch angetrieben sein und somit teilweise elektrifiziert sein. Der hintere Rädertrieb treibt ferner in an sich bekannter Weise einen Nockenwellenantrieb an (nicht dargestellt). Der hintere Rädertrieb weist ferner einen Nebenabtrieb (engl. Power-Take-Off) (nicht dargestellt) auf, zum Antrieb von z. B. einer Hydraulikpumpe für Aufbauten des Nutzfahrzeugs.

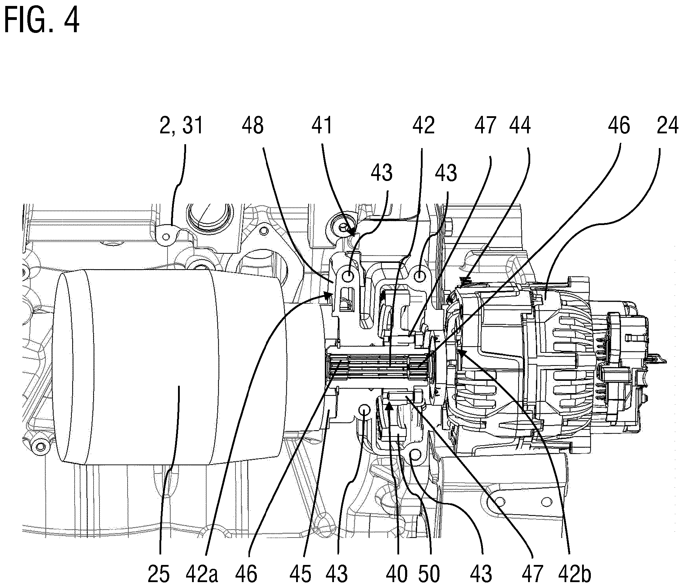

Eine Besonderheit der Anordnung 20 liegt darin, dass der Kolbenluftpresser aus Figur 1 durch eine Verdichtereinrichtung zur Drucklufterzeugung eines Druckluftsystems ersetzt wurde, bei der mindestens ein Zylinder der Brennkraftmaschine ein im Zylinderkopf angeordnetes steuerbares Ventil aufweist, über das in einem geöffnetem Zustand des Ventils eine Verbindung von dem Brennraum des mindestens einen Zylinders zu einem Druckluftsystem herstellbar und einem Druckluftspeicher des Druckluftsystems komprimiertes Gas aus dem Brennraum zuführbar ist. An der dadurch freigewordenen Nebentriebsschnittstelle ist eine seitlich und außerhalb am Kurbelgehäuse 2 der Brennkraftmaschine angeordnete Welle 42 als Teil eines Nebentriebs 40 vorgesehen. An der Welle sind ein 48V- Motor/Generator 24 und eine Expansionsmaschine 25 angeordnet, was nachfolgend noch detaillierter in Zusammenhang mit der Beschreibung zu Figur 4 beschrieben wird.

Die Ansicht der Figur 2 zeigt die Kaltseite 31 des Verbrennungsmotors 1, auf der das Motorsteuergerät 17, die Ladeluftführung 9, ein Kraftstoffmodul 16 und den Nebentrieb 40, an dem beispielhaft ein Motor/Generator 24 und die Expansionsmaschine 25 angeordnet sind. In dem Kraftstoffmodul 16 sind verschiedene Komponenten zur Unterstützung der Kraftstoffversorgung, wie beispielsweise ein Kraftstofffilter und Druckregler, integriert. Auf der Kaltseite sind neben der Expansionsmaschine 25 weitere an sich bekannte Komponenten eines Dampfkreislaufs angeordnet, nämlich eine Speisepumpe 26, ein Verteilerventil 27, ein Bypassventil 28 sowie ein Kondensator 29, die jeweils am Kurbelgehäuse 2 befestigt sind.

Figur 3 zeigt eine hintere Frontansicht auf dem Verbrennungsmotor zur Illustration von Winkelbereichen, an denen die Nebenaggregate angeordnet sind. Zur Festlegung von einem Winkelbereich wird ein Winkel α von einer hinteren Stirnseite (Getriebeseite) des Kurbelgehäuses 2 aus in Richtung der Brennkraftmaschine 1 gesehen und ausgehend von einem Winkel von 0° an der Unterseite des Kurbelgehäuses im Uhrzeigersinn nach oben bestimmt. Die nachfolgenden optionalen Winkelbereiche der Komponentenanordnung sind daher so beschrieben, als wenn man auf den Verbrennungsmotor von hinten (getriebeseitig) schaut. Der Winkel ist somit in Bezug auf eine zur Kurbelwelle parallele und diese enthaltende Vertikalebene 30 festgelegt, so dass der Winkelbereich von 0° bis 360° einen senkrechten Kreis zu dieser Vertikalebene aufspannt. Im gezeigten Beispiel ist die Seite 31 die Kaltseite und die Seite 32 die Heißseite des Verbrennungsmotors.

Der Nebentrieb 40 (mit den beispielhaft angebauten Maschinen Motor/Generator 24 und Expansionsmaschine 25) ist an der der seitlichen Wandung des Kurbelgehäuses auf der Kaltseite 31 in einem Winkelbereich von 110° bis 160° angeordnet. Die Kraftstoffpumpe 15 ist auf der Kaltseite 31 in einem Winkelbereich von 60° bis 120° angeordnet. Die Ölpumpe ist im unteren Bereich des Kurbelgehäuses in einem Winkelbereich von -90° bis 90° angeordnet. Wären Kalt- und Heißseite vertauscht, wären der Motor/Generator entsprechend in einem Winkelbereich von 200° bis 250° und die Kraftstoffpumpe in einem Bereich von 240° bis 300° seitlich am Kurbelgehäuse angeordnet.

Figur 4 zeigt eine Detailansicht eines Nebentriebs 40 gemäß einer Ausführungsform der Erfindung, wobei nur der Nebentrieb 40 in einer Schnittansicht dargestellt ist. Vorstehend wurde bereits erwähnt, dass eine Nebentriebsschnittstelle, an der bei einem aus dem Stand der Technik bekannten Verbrennungsmotor (siehe Figur 1) ein Luftverdichter angeordnet ist, nunmehr genutzt wird, um eine Welle 42 anzuordnen, die zwei freie Wellenenden 42a, 42b aufweist, die jeweils zur Verbindung mit einer leistungsgebenden und/oder leistungsnehmenden Maschine 24, 25 ausgebildet sind. Die Drehachse der Welle 42 verläuft parallel zur Kurbelwellendrehachse 18.

Die freien Wellenenden 42a, 42b können zur Verbindung mit jeweils einer leistungsgebenden und/oder leistungsnehmenden Maschine 24, 25 beispielsweise einen Verbindungsflansch, eine Innenverzahnung, eine Außenverzahnung, einen Kegelstumpf, ein Keilwellenprofil, ein Zahnwellenprofil oder vergleichbare Schnittstellen zur Welle-Nabe-Verbindung aufweisen. Die Welle 42 ist im gezeigten Beispiel als innenverzahnte Welle ausgeführt, so dass die leistungsgebenden und/oder leistungsnehmenden Maschinen 24, 25 jeweils mit einer Außenverzahnung 46 mit der Welle 42 in Wirkverbindung stehen.

Die Einspeisung und/oder Abnahme der Leistung der Welle 42 erfolgt über den hinteren Rädertrieb, wobei die Wirkverbindung zur Kurbelwelle 18 über eine seitliche Öffnung am Kurbelgehäuse 2 erfolgt. Hierbei ist die Welle 42 drehfest mit einem Zahnrad 50 des hinteren Rädertriebs verbunden, wobei das Zahnrad 50 von der Kurbelwelle der Brennkraftmaschine 1 ausgehend über Zwischenräder des hinteren Rädertriebs antreibbar ist. Das Zahnrad ist mit Befestigungselementen 47, z. B. Schrauben, an der Welle 42 gesichert.

Am Kurbelgehäuse befindet sich ein Zwischengehäuse 41, das über der seitlichen Öffnung liegt und an der seitlichen Wandung des Kurbelgehäuses 2 außerhalb am Kurbelgehäuse befestigt ist. Das Zwischengehäuse 41 ist auf der Kaltseite des Verbrennungsmotors befestigt in einem Winkelbereich von 110° bis 160°, wie vorstehend für den Motor/Generator 25 beschrieben. Das Zwischengehäuse 41 ist mittels Befestigungselementen 43, beispielsweise Schrauben, am Kurbelgehäuse befestigt.

Die Welle 42 ist in dem Zwischengehäuse 41 mittels Radial- und Axiallager gelagert. An gegenüberliegenden Stirnseiten 48 des Zwischengehäuses 41 sind Befestigungsflansche 44, 45 zur verdrehgesicherten Befestigung der Gehäuse der leistungsgebenden und/oder leistungsnehmenden Maschinen 24, 25 vorgesehen.

Das getriebeseitige Wellenende 42b der Welle 42 ist mit dem Motor/Generator 24 verbunden. Das gegenüberliegende Wellenende 42a der Welle ist mit einer Expansionsmaschine 25 verbunden. Selbstverständlich kann diese Anordnung auch vertauscht sein, so dass die Expansionsmaschine 25 am getriebeseitigen Wellenende 42b angeordnet wäre. Die Expansionsmaschine 25 ist Teil eines Abwärmenutzungssystems zur Umwandlung von Abwärme der Brennkraftmaschine in nutzbare Energie mittels eines Dampfkreislaufs, der ferner die Speisepumpe 26, das Verteilerventil 27, das Bypassventil 28 und den Kondensator 29 umfasst, wie vorstehend beschrieben.

Die Expansionsmaschine 25 und der Motor/Generator 24 stehen sowohl untereinander als auch mit der Kurbelwelle des Verbrennungsmotors 1 über den hinteren Rädertrieb in Wirkverbindung.

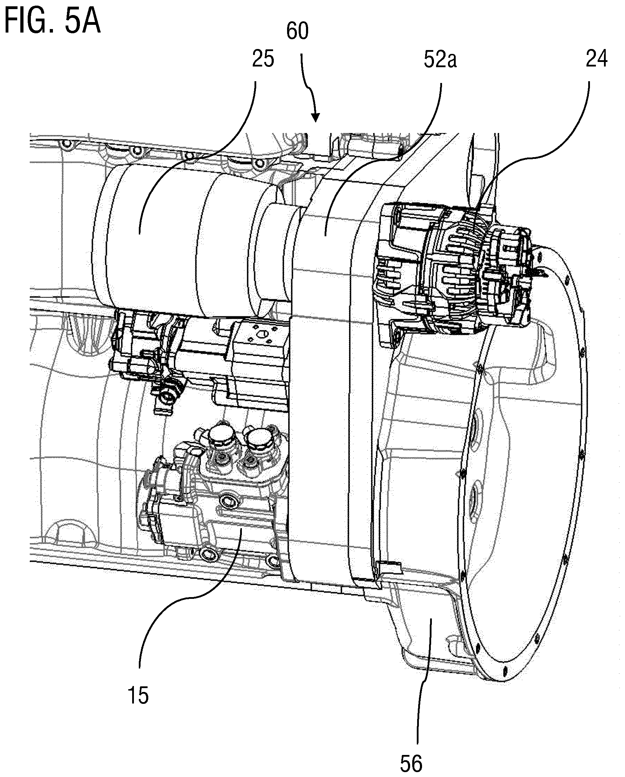

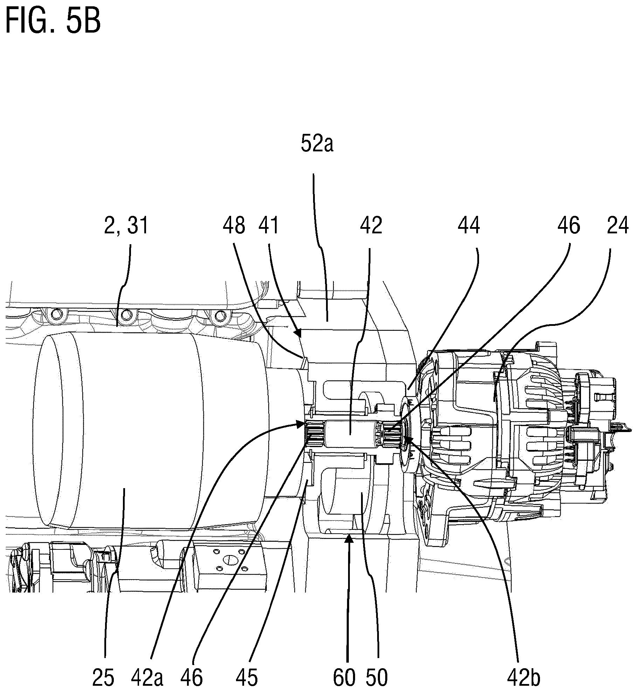

Die Figuren 5A und 5B zeigen Detailansichten eines Nebentriebs 60 gemäß einer weiteren Ausführungsform der Erfindung. Figur 5A zeigt eine perspektivische Detailansicht eines seitlichen hinteren Endbereichs der Brennkraftmaschine. Die Besonderheit dieser Ausführungsform liegt darin, dass die Welle 42 des Nebentriebs 60 in einem Gehäuseabschnitt des hinteren Steuergehäuses 52a gelagert ist. Hierzu ist das hintere Steuergehäuse 52a, das auch den hinteren Rädertrieb umhaust, im Vergleich zu dem in Figur 2 dargestellten Steuergehäuse 52 höher ausgeführt, so dass die Welle 42 an einem oberen äußeren Gehäuseabschnitt des Steuergehäuses 52a angeordnet werden kann. Das Schwungradgehäuse ist mit dem Bezugszeichen 56 bezeichnet.

Figur 5B zeigt den Nebentrieb 60 in einer Schnittansicht. Vorstehend wurde bereits erwähnt, dass das Zwischengehäuse 41 auch ein Teil des hinteren Steuergehäuses 52a oder das Steuergehäuse selbst sein kann. Vorliegend ist das Zwischengehäuse 41, in dem die Welle 42 gelagert ist, als Teil des Steuergehäuses 52a ausgeführt. Somit bildet die gelagerte Welle 42 und das darauf befestigte Zahnrad 50 einen Teil des hinteren Rädertriebs. Das Zwischengehäuse 41 ist ähnlich wie das Zwischengehäuse in Figur 2 ausgeführt. Insbesondere entsprechen Komponenten mit gleichen Bezugszeichen den Komponenten der Figur 2 und werden nicht gesondert beschrieben. Das Zahnrad 50 ist über Schrauben an der Welle 42 gesichert.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche.

### Bezugszeichenliste

- 1: Brennkraftmaschine, insbesondere Verbrennungsmotor
- 2: Kurbelgehäuse
- 3: Getriebeseite des Verbrennungsmotors
- 4: Vordere Stirnseite des Verbrennungsmotors
- 5: Oberseite des Verbrennungsmotors
- 6: Riementrieb
- 6a: Riemenscheibe
- 6b: Riemen
- 7: Lüfter
- 9: Ladeluftführung
- 10: Antriebsanordnung
- 11: Generator
- 12: Wasserpumpe
- 13: Kältemittelkompressor
- 14: Luftverdichter
- 15: Kraftstoff-Hochdruckpumpe
- 16: Kraftstoffservicemodul
- 17: Motorsteuergerät
- 18: Mittellinie der Kurbelwelle
- 19: Ölwanne
- 20: Antriebsanordnung
- 21: Flansch
- 22: Wasserpumpe (elektrifiziert)
- 24: Motor/Generator 12V, 24V, 48V oder Hochvolt (z.B. 400V)
- 25: Expander
- 26: Speisepumpe
- 27: Verteilerventil
- 28: Bypassventil
- 29: Kondensator
- 30: Vertikalebene
- 31: Kaltseite des Motors
- 32: Heißseite des Motors
- 40: Nebentrieb
- 41: Zwischengehäuse
- 42: Innenverzahnte Welle
- 42a: Erstes Ende
- 42b: Zweites Ende
- 43: Befestigungselement
- 44: Befestigungsflansch
- 45: Befestigungsflansch
- 46: Verzahnung zur Welle-Nabe-Verbindung
- 47: Befestigungselement
- 48: Stirnseite
- 50: Zahnrad
- 51: Steuergehäuse vorne
- 52: Steuergehäuse hinten
- 52a: Steuergehäuse hinten
- 56: Schwungradgehäuse
- 60: Nebentrieb

## Patentansprüche

1. Brennkraftmaschine (1) eines Nutzfahrzeugs mit einer Anordnung (20) von Nebenaggregaten,
wobei die Anordnung (20) von Nebenaggregaten riemenantriebsfrei ausgeführt ist, umfassend
a) eine generatorisch betreibbare elektrische Maschine (24);
b) eine Expansionsmaschine (25) eines Abwärmenutzungssystems zur Umwandlung von Abwärme der Brennkraftmaschine (1) oder eines Motorstaubremssystems in nutzbare Energie mittels eines Dampfkreislaufs;
wobei die elektrische Maschine (24) und die Expansionsmaschine (25) über einen Rädertrieb mit der Kurbelwelle der Brennkraftmaschine (1) in Wirkverbindung stehen; und
c) eine erste Gruppe von Nebenaggregaten, aufweisend eine Wasserpumpe (12), eine Kraftstoff-Vorförderpumpe, eine Kraftstoff-Hochdruckpumpe (15), eine Lenkhilfepumpe und eine Ölpumpe;
wobei die einzelnen Nebenaggregate der ersten Gruppe elektrisch angetrieben sind oder von einem mit der Brennkraftmaschine (1) in Wirkverbindung stehenden Rädertrieb mechanisch angetrieben sind.

2. Brennkraftmaschine nach einem der vorhergehenden Ansprüche, **dadurch gekennzeichnet, dass** die Wasserpumpe (12) und die Kraftstoff-Vorförderpumpe und die Lenkhilfepumpe jeweils elektrisch angetrieben sind.

3. Brennkraftmaschine nach einem der vorhergehenden Ansprüche, **dadurch gekennzeichnet, dass** die Kraftstoff-Hochdruckpumpe (15) und die Ölpumpe jeweils von dem mit der Brennkraftmaschine (1) in Wirkverbindung stehenden Rädertrieb mechanisch angetrieben sind.

4. Brennkraftmaschine nach einem der vorhergehenden Ansprüche, **dadurch gekennzeichnet, dass** die generatorisch betreibbare elektrische Maschine (24) auch motorisch betreibbar ist und seitlich an der Brennkraftmaschine (1) angeordnet ist.

5. Brennkraftmaschine nach einem der vorhergehenden Ansprüche, **gekennzeichnet durch** eine Verdichtereinrichtung zur Drucklufterzeugung eines Druckluftsystems, bei der mindestens ein Zylinder der Brennkraftmaschine (1) ein im Zylinderkopf angeordnetes steuerbares Ventil aufweist, über das in einem geöffnetem Zustand des Ventils eine Verbindung von dem Brennraum des mindestens einen Zylinders zu einem Druckluftsystem herstellbar und einem Druckluftspeicher des Druckluftsystems komprimiertes Gas aus dem Brennraum zuführbar ist.

6. Brennkraftmaschine nach einem der vorhergehenden Ansprüche, **dadurch gekennzeichnet, dass**, vom Getriebe aus in Richtung der Brennkraftmaschine (1) gesehen und ausgehend von einem Winkel von 0° an der Unterseite des Kurbelgehäuses (2) im Uhrzeigersinn nach oben,
a) die Kraftstoffpumpe (15) in einem Winkelbereich von 60° bis 120° oder von 240° bis 300° seitlich am Kurbelgehäuse (2) angeordnet ist; und/oder
b) die Ölpumpe in einem Winkelbereich von -90° bis 90° angeordnet ist; und/oder
c) dass die Welle (42) in einem Winkelbereich von 110° bis 160° oder von 200° bis 250° angeordnet ist.

7. Brennkraftmaschine nach einem der vorhergehenden Ansprüche, **gekennzeichnet durch** eine Welle (42), die mit der Kurbelwelle der Brennkraftmaschine (1) in Wirkverbindung steht und die zwei Wellenenden (42a, 42b), die jeweils zur Verbindung mit einer außerhalb vom Kurbelgehäuse (2) angeordneten leistungsgebenden und/oder leistungsnehmenden Maschine (24, 25) ausgebildet sind.

8. Brennkraftmaschine nach Anspruch 7, **gekennzeichnet durch** ein Zwischengehäuse (41), in dem die Welle (42) gelagert ist,
a) wobei das Zwischengehäuse (41) am Kurbelgehäuse (2) befestigt ist oder als Teil des Kurbelgehäuses (2) ausgebildet ist; oder
b) wobei das Zwischengehäuse (41) an einem Steuergehäuse (52a), in dem ein in Wirkverbindung mit der Brennkraftmaschine (1) stehender Rädertrieb angeordnet ist, befestigt ist oder als Teil des Steuergehäuses (52a) ausgebildet ist.

9. Brennkraftmaschine nach Anspruch 7, **dadurch gekennzeichnet, dass** die Welle (42) in einem Gehäuseabschnitt
a) des Kurbelgehäuses (2) gelagert ist; oder
b) eines Steuergehäuses (52a), in dem ein hinterer Rädertrieb, der in Wirkverbindung mit der Brennkraftmaschine (1) steht, gelagert ist.

10. Brennkraftmaschine nach einem der Ansprüche 8 oder 9, **dadurch gekennzeichnet,**
a) **dass** die Welle (42) mittels mindestens eines Radial- und/oder mindestens eines Axiallagers in dem Zwischengehäuse (41) oder dem Gehäuseabschnitt gelagert ist; und/oder
b) **dass** an gegenüberliegenden Stirnseiten (48) des Zwischengehäuses (41) oder des Gehäuseabschnitts jeweils eine Befestigungsschnittstelle (44, 45) zur verdrehgesicherten Befestigung eines Gehäuses der leistungsgebenden und/oder leistungsnehmenden Maschine (24, 25) vorgesehen ist.

11. Brennkraftmaschine nach einem der Ansprüche 7 bis 10, **dadurch gekennzeichnet**,
a1) dass eines (42a) der Wellenenden mit der Expansionsmaschine (25) verbunden ist; und/oder
a2) dass eines (42b) der Wellenenden mit der generatorisch betreibbaren elektrischen Maschine (24) verbunden ist; oder
b) dass beide Wellenenden (42a, 42b) mit einer generatorisch betreibbaren elektrischen Maschine verbunden sind.

12. Brennkraftmaschine nach einem der vorhergehenden Ansprüche, **dadurch gekennzeichnet, dass** die Anordnung (20) eine Speisepumpe (26), ein Verteilerventil (27), ein Bypassventil (28) und einen Kondensator (29) aufweist, die an der Brennkraftmaschine (1) angeordnet sind.

13. Brennkraftmaschine nach einem der Ansprüche 7 bis 12, **dadurch gekennzeichnet, dass** die Welle (42) auf einer Kaltseite (31) der Brennkraftmaschine (1) angeordnet ist.

14. Brennkraftmaschine nach einem der vorhergehenden Ansprüche, **dadurch gekennzeichnet, dass** die Wasserpumpe (12) an einer vorderen Stirnseite (4) der Brennkraftmaschine (1) oder an einer seitlichen Wandung des Kurbelgehäuses (2) befestigt ist.

15. Brennkraftmaschine nach einem der vorhergehenden Ansprüche, **dadurch gekennzeichnet, dass** die Lenkhilfepumpe und die Ölpumpe jeweils in einem Hauptförderbetrieb elektrisch angetrieben sind und in einem Notbetrieb mechanisch angetrieben sind.

16. Nutzfahrzeug mit einer Brennkraftmaschine nach einem der vorhergehenden Ansprüche.

## Claims

1. A combustion machine (1) of a utility vehicle having an arrangement (20) of auxiliary assemblies, wherein the arrangement (20) of auxiliary assemblies is implemented without a belt drive, comprising
a) an electric machine (24) which is operable as a generator;
b) an expansion machine (25) of a waste heat recovery system for converting waste heat of the combustion machine (1) or of an engine braking system into utilizable energy by way of a steam circuit;
wherein the electric machine (24) and the expansion machine (25) are operatively connected by way of a gear drive to the crankshaft of the combustion machine (1); and
c) a first group of auxiliary assemblies, having a water pump (12), a fuel predelivery pump, a highpressure fuel pump (15), a steering assistance pump and an oil pump;
wherein the individual auxiliary assemblies of the first group are electrically driven or are mechanically driven by way of a gear drive operatively connected to the combustion machine (1).

2. The combustion machine according to any one of the preceding claims, **characterized in that** the water pump (12) and the fuel predelivery pump and the steering assistance pump are in each case electrically driven.

3. The combustion machine according to any one of the preceding claims, **characterized in that** the highpressure fuel pump (15) and the oil pump are in each case mechanically driven by the gear drive operatively connected to the combustion machine (1).

4. The combustion machine according to any one of the preceding claims, **characterized in that** the electric machine (24) which is operable as a generator is also operable as a motor and is arranged laterally on the combustion machine (1).

5. The combustion machine according to any one of the preceding claims, **characterized by** a compressor device for generating compressed air for a compressed-air system, in the case of which at least one cylinder of the combustion machine (1) has a controllable valve arranged in the cylinder head, by way of which valve, when it is in an open state, a connection can be produced from the combustion chamber of the at least one cylinder to a compressed-air system and compressed gas from the combustion chamber can be supplied to a compressed-air accumulator of the compressed-air system.

6. The combustion machine according to any one of the preceding claims, **characterized in that**, as viewed from the gearbox in the direction of the combustion machine (1) and proceeding upward clockwise from an angle of 0° at the bottom side of the crankcase (2),
a) the fuel pump (15) is arranged laterally on the crankcase (2) in an angle range from 60° to 120° or from 240° to 300°; and/or
b) the oil pump is arranged in an angle range from -90° to 90°; and/or
c) **in that** the shaft (42) is arranged in an angle range from 110° to 160° or from 200° to 250°.

7. The combustion machine according to any one of the preceding claims, **characterized by** a shaft (42) which is operatively connected to the crankshaft of the combustion machine (1) and which has two shaft ends (42a, 42b), which are designed in each case for connection to a power-outputting and/or power-receiving machine (24, 25) arranged outside the crankcase (2).

8. The combustion machine according to Claim 7, **characterized by** an intermediate case (41) in which the shaft (42) is mounted,
a) wherein the intermediate case (41) is fastened to the crankcase (2) or is formed as part of the crankcase (2); or
b) wherein the intermediate case (41) is fastened to a control case (52a), in which a gear drive which is operatively connected to the combustion machine (1) is arranged, or said intermediate case (41) is formed as part of the control case (52a).

9. The combustion machine according to Claim 7, **characterized in that** the shaft (42) is mounted in a case section
a) of the crankcase (2); or
b) of a control case (52a), in which a rear gear drive is mounted, which is operatively connected to the combustion machine (1).

10. The combustion machine according to either one of Claims 8 and 9, **characterized**
a) **in that** the shaft (42) is mounted in the intermediate case (41) or in the case section by way of at least one radial and/or at least one axial bearing; and/or
b) **in that**, on opposite face sides (48) of the intermediate case (41) or of the case section, there is provided in each case one fastening interface (44, 45) for the rotationally secured fastening of a case of the power-outputting and/or power-receiving machine (24, 25).

11. The combustion machine according to any one of Claims 7 to 10, **characterized**
a) **in that** one (42a) of the shaft ends is connected to the expansion machine (25); and/or
b) **in that** one (42b) of the shaft ends is connected to the electric machine (24) which is operable as a generator; or
c) **in that** both shaft ends (42a, 42b) are connected to an electric machine which is operable as a generator.

12. The combustion machine according to any one of the preceding claims, **characterized in that** the arrangement (20) has a feed pump (26), a distributor valve (27), a bypass valve (28) and a condenser (29) which are arranged on the combustion machine (1).

13. The combustion machine according to any one of Claims 7 to 12, **characterized in that** the shaft (42) is arranged on a cold side (31) of the combustion machine (1).

14. The combustion machine according to any one of the preceding claims, **characterized in that** the water pump (12) is arranged on a front face side (4) of the combustion machine (1) or on a lateral wall of the crankcase (2).

15. The combustion machine according to any one of the preceding claims, **characterized in that** the steering assistance pump and the oil pump are in each case electrically driven in a main delivery operating state and are mechanically driven in an emergency operating state.

16. A utility vehicle having a combustion machine according to any one of the preceding claims.

## Revendications

1. Moteur à combustion interne (1) d'un véhicule utilitaire comportant un ensemble (20) de modules auxiliaires, l'ensemble (20) de modules auxiliaires étant réalisé sans entraînement à courroie, comportant
a) une machine électrique (24) pouvant fonctionner comme générateur ;
b) une machine de détente (25) d'un système d'utilisation de chaleur perdue pour la conversion de chaleur perdue du moteur à combustion interne (1) ou d'un système de frein moteur en énergie utile à l'aide d'un circuit de vapeur ;
la machine électrique (24) et la machine de détente (25) étant en liaison fonctionnelle avec le vilebrequin du moteur à combustion interne (1) par le biais d'un entraînement par engrenage ; et
c) un premier groupe de modules auxiliaires, comprenant une pompe à eau (12), une pompe de préalimentation en carburant, une pompe à carburant haute pression (15), une pompe d'assistance de direction et une pompe à huile ;
les modules auxiliaires individuels du premier groupe étant entraînés électriquement ou étant entraînés mécaniquement par un entraînement par engrenage en liaison fonctionnelle avec le moteur à combustion interne (1) .

2. Moteur à combustion interne selon l'une des revendications précédentes, **caractérisé en ce que** la pompe à eau (12) et la pompe de préalimentation en carburant et la pompe d'assistance de direction sont respectivement entraînées électriquement.

3. Moteur à combustion interne selon l'une des revendications précédentes, **caractérisé en ce que** la pompe à carburant haute pression (15) et la pompe à huile sont entraînées mécaniquement respectivement par l'entraînement par engrenage en liaison fonctionnelle avec le moteur à combustion interne (1).

4. Moteur à combustion interne selon l'une des revendications précédentes, **caractérisé en ce que** la machine électrique (24) pouvant fonctionner comme générateur peut également fonctionner comme moteur et est disposée latéralement sur le moteur à combustion interne (1) .

5. Moteur à combustion interne selon l'une des revendications précédentes, **caractérisé par** un dispositif compresseur servant à la génération d'air comprimé d'un système à air comprimé, dans lequel au moins un cylindre du moteur à combustion interne (1) comprend une soupape pouvant être commandée disposée dans la culasse, soupape par le biais de laquelle une liaison de la chambre de combustion de l'au moins un cylindre vers un système à air comprimé peut être réalisée dans un état ouvert de la soupape et du gaz comprimé provenant de la chambre de combustion peut être acheminé jusqu'à un réservoir d'air comprimé du système à air comprimé.

6. Moteur à combustion interne selon l'une des revendications précédentes, **caractérisé en ce que**, vu à partir de la transmission en direction du moteur à combustion interne (1) et à partir d'un angle de 0° sur le côté inférieur du carter de vilebrequin (2) dans le sens des aiguilles d'une montre vers le haut,
a) la pompe à carburant (15) est disposée latéralement sur le carter de vilebrequin (2) dans une plage angulaire de 60° à 120° ou de 240° à 300° ; et/ou
b) la pompe à huile est disposée dans une plage angulaire de -90° à 90° ; et/ou
c) l'arbre (42) est disposé dans une plage angulaire de 110° à 160° ou de 200° à 250°.

7. Moteur à combustion interne selon l'une des revendications précédentes, **caractérisé par** un arbre (42) qui est en liaison fonctionnelle avec le vilebrequin du moteur à combustion interne (1) et les deux extrémités d'arbre (42a, 42b) qui sont respectivement réalisées pour la liaison à une machine (24, 25) fournissant de la puissance et/ou recevant de la puissance et disposée à l'extérieur du carter de vilebrequin (2).

8. Moteur à combustion interne selon la revendication 7, **caractérisé par** un carter intermédiaire (41) dans lequel à l'arbre (42) est monté,
a) le carter intermédiaire (41) étant fixé au carter de vilebrequin (2) ou étant réalisé comme partie de carter de vilebrequin (2) ; ou
b) le carter intermédiaire (41) étant fixé à un carter de commande (52a) dans lequel un entraînement par engrenage en liaison fonctionnelle avec le moteur à combustion interne (1) est disposé, ou étant réalisé comme partie du carter de commande (52a).

9. Moteur à combustion interne selon la revendication 7, **caractérisé en ce que** l'arbre (42) est monté
a) dans une partie de carter de vilebrequin (2) ; ou
b) dans une partie d'un carter de commande (52a) dans laquelle un entraînement par engrenage arrière est monté qui est en liaison fonctionnelle avec le moteur à combustion interne (1).

10. Moteur à combustion interne selon l'une des revendications 8 ou 9, **caractérisé**
a) **en ce que** l'arbre (42) est monté dans le carter intermédiaire (41) ou la partie de carter au moyen d'au moins un palier radial et/ou d'au moins un palier axial ; et/ou
b) **en ce qu'**une interface de fixation (44, 45) servant à la fixation de manière bloquée en rotation d'un carter de la machine (24, 25) fournissant de la puissance et/ou recevant de la puissance est respectivement prévue sur des côtés frontaux opposés (48) du carter intermédiaire (41) ou de la partie de carter.

11. Moteur à combustion interne selon l'une des revendications 7 à 10, caractérisé
a1) en ce que l'une (42a) des extrémités d'arbre est reliée à la machine de détente (25) ; et/ou
a2) en ce que l'une (42b) des extrémités d'arbre est reliée à la machine électrique (24) pouvant fonctionner comme générateur ; ou
b) en ce que les deux extrémités d'arbre (42a, 42b) sont reliées à une machine électrique pouvant fonctionner comme générateur.

12. Moteur à combustion interne selon l'une des revendications précédentes, **caractérisé en ce que** l'ensemble (20) comprend une pompe d'alimentation (26), une soupape de distribution (27), une soupape de dérivation (28) et un condenseur (29) qui sont disposés sur le moteur à combustion interne (1).

13. Moteur à combustion interne selon l'une des revendications 7 à 12, **caractérisé en ce que** l'arbre (42) est disposé sur un côté froid (31) du moteur à combustion interne (1).

14. Moteur à combustion interne selon l'une des revendications précédentes, **caractérisé en ce que** la pompe à eau (12) est fixée à un côté frontal avant (4) du moteur à combustion interne (1) ou à une paroi latérale du carter de vilebrequin (2).

15. Moteur à combustion interne selon l'une des revendications précédentes, **caractérisé en ce que** la pompe d'assistance de direction et la pompe à huile sont respectivement entraînées électriquement dans un fonctionnement de refoulement principal et sont entraînées mécaniquement dans un fonctionnement d'urgence.

16. Véhicule utilitaire comportant un moteur à combustion interne selon l'une des revendications précédentes.
